**Europäisches Patentamt**

**European Patent Office**

**Office européen des brevets**

(19)

(11) Veröffentlichungsnummer: **0 066 764**
**B1**

(12) # EUROPÄISCHE PATENTSCHRIFT

(45) Veröffentlichungstag der Patentschrift:
**20.03.85**

(51) Int. Cl.⁴: **A 01 N 55/04**, B 27 K 3/50 //
(A01N55/04, 43/08)

(21) Anmeldenummer: **82104499.7**

(22) Anmeldetag: **22.05.82**

(54) **Bakterizides und fungizides Mittel.**

(30) Priorität: **04.06.81 DE 3122270**

(43) Veröffentlichungstag der Anmeldung:
**15.12.82 Patentblatt 82/50**

(45) Bekanntmachung des Hinweises auf die Patenterteilung:
**20.03.85 Patentblatt 85/12**

(84) Benannte Vertragsstaaten:
**AT BE CH DE FR GB IT LI LU NL SE**

(56) Entgegenhaltungen:
**EP - A - 0 003 606**
**EP - A - 0 022 900**
**EP - A - 0 035 096**
**EP - A - 0 038 932**
**DE - A - 1 810 466**
**DE - A - 2 455 082**

(73) Patentinhaber: **SCHERING AKTIENGESELLSCHAFT**
**Berlin und Bergkamen, Waldstrasse 14 Postfach 15 40,**
**D-4709 Bergkamen (DE)**

(72) Erfinder: **Plum, Hans, Dr. Dipl.-Chem., Sulkshege 12,**
**D-4700 Hamm (DE)**
Erfinder: **Landsiedel, Horst, Auf dem Spitt 34,**
**D-5758 Fröndenberg (DE)**

**Beschreibung**

Die Erfindung betrifft ein Mittel, welches mit bakteriziden und fungiziden Eigenschaften als Desinfektionsmittel, Holzschutzmittel, zur bakteriziden und fungiziden Ausrüstung von Textilien, Kunststoffen, Baustoffen oder als Konservierungsmittel bzw. zur bioziden Ausrüstung von Anstrichsystemen geeignet ist.

Das erfindungsgemässe Mittel enthält als Wirkstoffe

a) Trialkylzinnverbindungen mit einer Gesamt-C-Zahl der am Zinn gebundenen Alkylgruppen von 9 - 12 oder Triphenylzinnverbindungen und
b) 2,5-Dimethyl-n-cyclohexyl-N-methoxy-3-furancarbonsäureamid

im Gewichtsverhältnis 4 : 1 bis 1 : 4, vorzugsweise 2 : 1 bis 1 : 2.

Die hohe Wirksamkeit von Triorganozinnverbindungen gegen Mikroorganismen, z.B. schädliche Pilze und Bakterien, ist bekannt. Das Wirkungsoptimum dieser Verbindungsklasse liegt dann vor, wenn die Gesamt-C-Zahl der am Zinn gebundenen Alkylgruppen 9 - 12 beträgt. Kürzere oder längere Gruppen verringern die biozide Wirksamkeit. Triorganozinnverbindungen zeigen zwar ein relativ breites Wirkungsspektrum; gegen verschiedene Mikroorganismen, z.B. gramnegative Bakterien und bestimmte Bläuepilze, ist die Wirkung jedoch vergleichsweise schwach.

Die ebenfalls als Biozid bekannte Substanz 2,5-Dimethyl-N-cyclohexyl-N-methoxy-3-furancarbonsäureamid weist gegen eine Reihe von holzzerstörenden Pilzen gute Wirkung auf, gegen Bakterien und bestimmte Pilze, z.B. Cladosporum herbarum, Trichoderma viride und einige Aspergillus-Arten, ist eine Wirkung kaum oder nur sehr schwach vorhanden.

Die europäische Patentanmeldung 81 100 207 (35096) betrifft ein Holzschutzmittelkonzentrat, bestehend aus einer wasserverdünnbaren Emulsion oder Lösung, die bestimmte Gewichtsteile eines organisch-chemischen, wasserunlöslichen Lösungsmittels oder Lösungsmittelgemisches und darin enthaltend Insektizide und/oder Fungizide und bestimmte Gewichtsteile eines flüssigen Gemisches, bestehend aus nichtionogenen Emulgatoren und wasserlöslichen ionogenen, kationaktiven Netzmitteln bzw. Lösungsvermittlern sowie gegebenenfalls Wasser enthält. Als fungizide Wirkstoffe, die allein oder in Kombination eingesetzt werden können, wird eine Reihe von Verbindungen genannt, darunter auch 2,5-Dimethyl-N-cyclohexyl-N-methoxy-3-furancarbonsäureamid und Triorganozinnverbindungen.

Die europäische Patentanmeldung 81 102 103 (38932) betrifft ein Holzschutzmittel, enthaltend eine wässrige Lösung von einem Alkydharz und eine Reihe an fungizid oder insektizid wirksamen Stoffen, wobei auch Tributylzinnverbindungen und 2,5-Dimethyl-N-cyclohexyl-N-methoxy-3-furancarbonsäureamid genannt werden.

Es wurde nun überraschend gefunden, dass Kombinationen von Triorganozinnverbindungen mit 2,5-Dimethyl-N-cyclohexyl-N-methoxy-3-furancarbon- säureamid gegen Mikroorganismen eine synergistische Wirkung aufweisen. Die erfindungsgemässen Mittel erweitern die Wirkungsspektren der einzelnen Substanzen erheblich und verstärken die Hemmwirkung gegenüber Mikroorganismen, gegen die die einzelnen Substanzen an sich schon eine gute Wirkung aufweisen (siehe Tab. 1 - 4).

Damit sind vielfältige Anwendungsmöglichkeiten gegeben.

Die erfindungsgemässen Mittel lassen sich insbesondere für den Holzschutz einsetzen, da hierdurch neben der Verhinderung des Abbaus durch holzzerstörende Pilze auch ein Schutz gegen Bakterienbefall erreicht wird. Bakterien bewirken keinen Abbau des Holzes, können aber einen Angriff durch Pilze begünstigen.

Die Mittel werden in Form von Lösungen, gegebenenfalls mit Farb- und Hilfsstoffen, in das Holz durch Streichen, Spritzen, Sprühen oder Tauchen eingebracht.

Des weiteren lassen sich die erfindungsgemässen Mittel für die biozide Ausrüstung von Textilien, Kunststoffen und Baustoffen einsetzen, wobei sie zweckmässig in Form von Zubereitungen wie Lösungen, Emulsionen, Dispersionen mit und ohne Bindemittel oder mit festen Trägerstoffen bzw. Verdünnungsmitteln und gegebenenfalls mit Zusatz von Netz-, Haft-, Emulgier- und Dispergierhilfsmitteln angewandt werden.

Die Wirkstoffkonzentration liegt gewöhnlich im Bereich von 0,1 bis 5% und wird durch die Anforderungen der Anwendung bestimmt.

*Beispiel 1*

Eine farblose, nicht bindemittelhaltige Formulierung aus

| 2 Gew.-Tl. | | Tri-n-butylzinnlinoleat |
|---|---|---|
| 2 | » » | 2,5-Dimethyl-N-cyclohexyl-N-methoxy-3-furancarbonsäureamid |
| 6 | » » | Diäthylenglykolmonobutyläther |
| 90 | » » | hochsiedendes Testbenzin (Kristallöl 60) |

zeigt ein gutes Penetrationsvermögen und kann beispielsweise als Grundierung für Bauholz eingesetzt werden.

*Beispiel 2*

Eine Formulierung (farbige Lasur) aus

| 1,3 Gew.-Tl. | | Tri-n-butylzinnoxid |
|---|---|---|
| 2,2 | » | 2,5-Dimethyl-N-cyclohexyl-N-methoxy-3-furancarbonsäureamid |
| 30 | » | Alkydharz (Synthalat MF 620, 60%ig) |
| 0,5 | » | Sikkative |
| 0,5 | » | Antiabsetzmittel |
| 8,5 | » | Eisenoxidrotpaste |
| 1,5 | » | Eisenoxidschwarzpaste |
| 5 | » | Diäthylenglykolmonobutyläther |
| 50,5 | » | hochsiedendes Testbenzin (Kristallöl 60) |

ist geeignet zum Anstrich von Fensterrahmen, Türen, Holzverschalungen usw.

*Beispiel 3*

15 Gew.-Tl. Tri-n-butylzinnoxid
15 » » 2,5-Dimethyl-N-cyclohexyl-N-meth-
oxy-3-furancarbonsäureamid
70 » » nichtionogener Emulgator (Marlomet
ISM)

Die klare Mischung ergibt im Verhältnis 1 : 5 bis 1 : 30 mit Wasser verdünnt stabile Emulsionen, die für den Schutz von frisch gefälltem Holz durch Streichen, Spritzen oder Tauchen aufgebracht werden.

*Tabelle 1*

Zum Wirkungsvergleich wurden mit den im folgenden näher bezeichneten äthanolischen Lösungen Papierrundfilter (∅ 5,5 cm) getränkt, an der Luft getrocknet und danach in Petrischalen auf Plate-count-Agar, der mit Bakteriensuspensien beimpft war, gelegt und 2 Tage bei +37°C bebrütet. Danach wurden die Grössen der Hemmzonen um die Filter bestimmt:

| Wirkstoff | Gew.-% in Äthanol | Bacillus subtilis | Bacillus mesentericus | Proteus vulgaris |
|---|---|---|---|---|
| | | | Hemmzonen in mm | |
| Tributylzinnoxid | 0,5 | 2 - 3 | 3 - 5 | 0 - 1 |
| (TBTO) | 0,75 | 5 - 7 | 5 - 6 | 2 - 3 |
| | 1,5 | 10 - 12 | 8 - 10 | 5 - 6 |
| Tributylzinnbenzoat | 1,0 | 5 - 6 | 5 - 7 | 2 - 3 |
| (TBTB) | 2,0 | 10 - 12 | 10 - 12 | 5 - 6 |
| Tributylzinnnaphthenat | 1,5 | 4 - 6 | 3 - 5 | 0 - 1 |
| (TBTN) | 3,0 | 8 - 10 | 7 - 9 | 1 - 2 |
| Tributylzinnlinoleat | 1,5 | 4 - 5 | 3 - 5 | 0 - 1 |
| (TBTL) | 2,0 | 4 - 5 | 6 - 8 | 1 - 2 |
| | 3,0 | 8 - 10 | 7 - 9 | 1 - 3 |
| 2,5-Dimethyl-N-cyclohexyl-N- | 1,0 | 0 - 1 | 0 - 1 | 0 |
| -methoxy-3-furancarbonsäureamid | 1,5 | 0 - 1 | 0 - 1 | 0 |
| | 2,0 | 0 - 1 | 0 - 1 | 0 |
| | 2,5 | 1 - 2 | 1 - 2 | 0 |
| | 3,0 | 2 - 4 | 1 - 2 | 0 - 1 |
| TBTO: 2,5-Dimethyl-N-cyclohexyl-N-methoxy-3-furancarbon-säureamid | 0,5 : 1,0 | 6 - 8 | 4 - 6 | 2 - 3 |
| | 0,5 : 1,5 | 8 - 10 | 5 - 7 | 3 - 4 |
| | 0,5 : 2,0 | 8 - 10 | 8 - 10 | 4 - 5 |
| | 0,75 : 1,0 | 8 - 10 | 8 - 10 | 6 - 8 |
| | 0,75 : 1,5 | 9 - 11 | 9 - 11 | 6 - 8 |
| TBTB: 2,5-Dimethyl-N-cyclohexyl--N-methoxy-3-furancarbonsäureamid | 1,0 : 1,0 | 10 - 12 | 10 - 12 | 4 - 6 |
| TBTN: 2,5-Dimethyl-N-cyclohexyl--N-methoxy-3-furancarbonsäureamid | 1,5 : 1,0 | 8 - 10 | 8 - 10 | 5 - 7 |
| TBTL: 2,5-Dimethyl-N-cyclohexyl-N-methoxy-3-furan-carbonsäureamid | 1,5 : 1,0 | 6 - 7 | 6 - 8 | 3 - 4 |
| | 1,5 : 1,5 | 6 - 8 | 6 - 8 | 3 - 4 |
| | 1,5 : 2,0 | 7 - 9 | 8 - 10 | 4 - 5 |
| | 2,0 : 1 | 6 - 8 | 6 - 8 | 4 - 5 |
| | 2,0 : 1,5 | 8 - 10 | 8 - 10 | 4 - 5 |
| TBTCL: 2,5-Dimethyl-N-cyclohexyl--N-methoxy-3-furancarbonsäureamid | 1,0 : 1,0 | 9 - 11 | 10 - 12 | 5 - 6 |
| 0-Probe | | 0 | 0 | 0 |

*Tabelle 2*

Nach der Methode aus Tabelle 1 wurden getränkte Papierrundfilter auf Biomalzagar, besprüht mit Sporensuspension von Testpilzen, gelegt und 3 Wochen bei +30°C bebrütet. Danach wurden die Hemmzonen um die Proben bestimmt:

| Wirkstoff | Gew.-% in Äthanol | Hemmzonen in mm (FZ = Farbänderungszone der Sporulierung) | | |
| --- | --- | --- | --- | --- |
| | | Poria monticula | Cladosporum herbarum | Trichoderma viride |
| | | | | (FZ) |
| TBTO | 0,75 | 8 - 10 | 6 - 7 | 2 - 3 (8-10) |
| | 1,5 | 12 - 15 | 10 - 12 | 3 - 5 (15) |
| TBTN | 1,5 | 5 - 7 | 0 - 1 | 1 - 2 (6-8) |
| | 3,0 | 8 - 10 | 1 - 2 | 2 - 3(10-12) |
| 2,5-Dimethyl-N-cyclohexyl-N--methoxy-3-furancarbonsäureamid | 1,0 | 0 - 1 | 0* | 0* |
| | 2,0 | 1 - 2 | 0* | 0* |
| | 3,0 | 8 - 10 | 0* | 0* |
| TBTO: 2,5-Dimethyl-N-cyclohexyl--N-methoxy-3-furancarbonsäureamid | 0,75 : 1,0 | 15 | 7 - 9 | 4 - 6 (15) |
| TBTN: 2,5-Dimethyl-N-cyclohexyl--N-methoxy-3-furancarbonsäureamid | 1,5 : 1,0 | >15 | 2 - 3 | 2 - 3 (10-12) |
| 0-Probe | | | 0* | 0* |

\*) = starker Bewuchs der Probe

*Tabelle 3*

Nach der Methode aus Tabelle 2 wurden die Hemmzonen um die Proben bestimmt:

| Wirkstoff | Gew.-% in Äthanol | Hemmzonen in mm (FZ = Farbänderungszone der Sporulierung) | | |
| --- | --- | --- | --- | --- |
| | | Pullularia pullulans | Aspergillus ustus | Aspergillus versicolor |
| TBTB | 1,0 | 2 - 3 | 3 - 4 | 2 - 3 |
| | 2,0 | 4 - 6 | 5 - 7 | 4 - 6 |
| TBTL | 1,5 | 0 | 0 - 1 | 1 - 2 |
| | 3,0 | 0 - 1 | 1 - 2 | 3 - 4 |
| 2,5-Dimethyl-N-cyclohexyl-N--methoxy-3-furancarbonsäureamid | 1,0 | 0* | 0* | 0* |
| | 2,0 | 0* | 0* | 0* |
| | 3,0 | 0* | 0* | 0* |
| TBTB: 2,5-Dimethyl-N-cyclohexyl--N-methoxy-3-furancarbonsäureamid | 1,0 : 1,0 | 6 - 8 FZ (15) | 2 - 3 | 4 - 6 |
| TBTL: 2,5-Dimethyl-N-cyclohexyl--N-methoxy-3-furancarbonsäureamid | 1,5 : 1,0 | 2 - 3 FZ (6-8) | 0 - 1 | 3 - 4 |
| 0-Probe | | 0* | 0* | 0* |

\*) = starker Bewuchs der Proben

*Tabelle 4*

Nach der Methode aus Tabelle 2 wurden die Hemmzonen um die Proben bestimmt:

| Wirkstoff | Gew.-% in Äthanol | Hemmzonen in mm (FZ = Farbänderungszone der Sporulierung) | |
| --- | --- | --- | --- |
| | | Pullularia pullulans | Trichoderma viride |
| 2,5-Dimethyl-N-cyclohexyl-N--methoxy-3-furancarbonsäureamid | 1,0 | 0* | 0* |
| | 1,5 | 0* | 0* |
| | 2,0 | 0* | 0* |
| | 2,5 | 0* | 0 - 1* |

*Tabelle 4* (Fortsetzung)

| Wirkstoff | Gew.-% in Äthanol | Hemmzonen in mm (FZ = Farbänderungszone der Sporulierung) | |
|---|---|---|---|
| | | Pullularia pullulans | Trichoderma viride |
| TBTO | 0,5 | 3 - 4 | 2 - 3 FZ(8-10) |
| | 0,75 | 4 - 5 | 3 - 4 FZ(10-12) |
| TBTL | 1,5 | 0 | 0 FZ(6-8) |
| | 2,0 | 0 - 1 | 0 - 1 FZ(8-10) |
| TBTO: 2,5-Dimethyl-N-cyclohexyl- -N-methoxy-3-furansäureamid | 0,5 : 1,0 | 4 - 5 FZ(8-10) | 4 - 5 FZ(8-10) |
| | 0,5 : 1,5 | 5 - 6 FZ(8-10) | 5 - 6 FZ(10-12) |
| | 0,5 : 2,0 | 6 - 7 FZ(10-12) | 5 - 6 FZ(10-12) |
| | 0,75 : 1,0 | 5 - 6 FZ(10-12) | 5 - 7 FZ(12-15) |
| | 0,75 : 1,5 | 7 - 8 FZ(10-12) | 6 - 8 FZ(12-15) |
| TBTL: 2,5-Dimethyl-N-cyclohexyl- -N-methoxy-3-furansäureamid | 1,5 : 1,0 | 1 - 2 FZ(5-7) | 0 - 1 FZ(6-8) |
| | 1,5 : 1,5 | 2 - 3 FZ(6-8) | 1 - 2 FZ(6-8) |
| | 1,5 : 2,0 | 3 - 4 FZ(8-10) | 2 - 3 FZ(8-10) |
| | 2,0 : 1 | 3 - 4 FZ(8-10) | 2 - 3 FZ(10-12) |
| | 2,0 : 1,5 | 3 - 4 FZ(10-12) | 3 - 4 FZ(10-12) |

*) = starker Bewuchs der Probe

**Patentansprüche für die Vertragsstaaten:**
BE, CH, DE, FR, GB, IT, LI, LU, NL, SE

1. Bakterizides und fungizides Mittel, enthaltend als Wirkstoffe
a) Trialkylzinnverbindungen mit einer Gesamt-C-Zahl der am Zinn gebundenen Alkylgruppen von 9 - 12 oder Triphenylzinnverbindungen und
b) 2,5-Dimethyl-N-cyclohexyl-N-methoxy-3-furan-carbonsäureamid
im Gewichtsverhältnis 4 : 1 bis 1 : 4.

2. Wirkstoffmischung nach Anspruch 1 im Gewichtsverhältnis 2 : 1 bis 1 : 2.

3. Verwendung der Wirkstoffmischung gemäss den Ansprüchen 1 und 2 zur Herstellung von Holzschutzmitteln.

**Patentansprüche für Vertragsstaat: AT**

1. Verwendung einer Mischung von
a) Trialkylzinnverbindungen mit einer Gesamt-C-Zahl der am Zinn gebundenen Alkylgruppen von 9 - 12 oder Triphenylzinnverbindungen und
b) 2,5-Dimethyl-N-cyclohexyl-N-methoxy-3-furan-carbonsäureamid im Gewichtsverhältnis 4 : 1 bis 1 : 4
als bakterizide und fungizide Mittel.

2. Verwendung einer Mischung gemäss Anspruch 1, dadurch gekennzeichnet, dass die Komponenten im Verhältnis 2 : 1 bis 1 : 2, eingesetzt werden.

3. Verwendung der Wirkstoffmischung gemäss den Ansprüchen 1 und 2 zur Herstellung von Holzschutzmitteln.

**Claims for the contracting states:**
BE, CH, DE, FR, GB, IT, LI, LU, NL, SE

1. Bactericidal and fungicidal agent containing as active substances
a) trialkyltin compounds having a total number of carbon atoms in the alkyl groups bonded to the tin of from 9 to 12 or triphenyltin compounds, and
b) 2,5-dimethyl-N-cyclohexyl-N-methoxy-3-fura-necarboxylic acid amide
in a ratio by weight of from 4 : 1 to 1 : 4.

2. Active substance mixture according to claim 1 in a ratio by weight of from 2 : 1 to 1 : 2.

3. Use of the active substance mixture according to claims 1 and 2 for the manufacture of wood-protecting agents.

**Claims for the contracting state: AT**

1. Use of a mixture of
a) trialkyltin compounds having a total number of carbon atoms in the alkyl groups bonded to the tin of from 9 to 12 or triphenyltin compounds, and
b) 2,5-dimethyl-N-cyclohexyl-N-methoxy-3-fura-necarboxylic acid amide in a ratio by weight of from 4 : 1 to 1 : 4
as bactericidal and fungicidal agents.

2. Use of a mixture according to claim 1, characterized in that the components are used in a ratio by weight of from 2 : 1 to 1 : 2.

3. Use of the active substance mixture according to claims 1 and 2 for the manufacture of wood-protecting agents.

**Revendications pour les Etats contractants:**
BE, CH, DE, FR, GB, IT, LI, LU, NL, SE

1. Agent bactéricide et fongicide, contenant comme substances actives:
a) des composés du trialkylétain ayant un nombre total de C des groupes alkyles liés à l'étain de 9 à 12 ou des composés du triphénylétain et,

b) du N-cyclohexyl-N-méthoxy diméthyl-2,5 furanne-carboxamide-3

dans le rapport pondéral de 4 : 1 à 1 : 4.

2. Mélange de substances actives selon la revendication 1 dans le rapport pondéral 2 : 1 à 1 : 2.

3. Utilisation du mélange de substances actives suivant les revendications 1 et 2 pour la préparation d'agents de protection du bois.


**Revendications pour l'Etat contractant: AT**

1. Application d'un mélange constitué:
a) de composés trialkylstanniques dont les groupes alkyles liés à l'étain contiennent, dans leur ensemble, de 9 à 12 atomes de carbone, ou de composés triphénylstanniques, et,

b) de N-cyclohexyl-N-méthoxy diméthyl-2,5 furanne-carboxamide-3 dans un rapport pondéral compris entre 4 : 1 et 1 : 4,

comme produit bactéricide et fongicide.

2. Application d'un mélange selon la revendication 1, caractérisée en ce que les composantes sont mises en jeu dans un rapport compris entre 2 : 1 et 1 : 2.

3. Application du mélange de substances actives selon les revendications 1 et 2 pour la préparation d'agents de protection du bois.